# EUROPEAN PATENT APPLICATION

(11) **EP 3 202 293 A1**
(43) Date of publication of application: **09.08.2017**
(21) Application number: 17152902.7
(22) Date of filing: 24.01.2017
(51) Int. Cl.: A47J 43/07, A47J 43/042, A47J 43/27, B01F 7/00

(54) **CONTAINER AND BLENDER HAVING THE SAME**

(30) Priority: 04.02.2016 CN 201610079246; 27.10.2016 CN 201610969491
(71) Applicant: Tsann Kuen (Zhangzhou) Enterprise Co., Ltd., Fujian 363107 (CN)
(72) Inventor: SUNG, Chuncheng, Zhangzhou, Fujian (CN); DU, Ying, Zhangzhou, Fujian (CN); ZENG, Hao, Zhangzhou, Fujian 363107 (CN); LIN, Chieh-Wen, Zhangzhou, Fujian (CN); WEN, Ming-Di, Zhangzhou, Fujian (CN); DING, Jie, Zhangzhou, Fujian (CN)
(74) Representative: Wynne-Jones, Lainé and James LLP

(57) **Abstract**

A container (3) is adapted for use in a blender, and includes a surrounding wall (31) surrounding an axis (L), defining a receiving space (30), and having an inner surface (311) that faces the receiving space (30) and that has spaced-apart bottom and top edges (314, 315). The container further includes a plurality of turbulence ridges (33) protruding from the inner surface (311) of the surrounding wall (31) into the receiving space (30). Each of the turbulence ridges (33) extends from the bottom edge (314) toward the top edge (315) of the inner surface (311) and extends spirally about the axis (L).

## Description

The disclosure relates to a blender, and more particularly to a blender for cutting and mixing food materials.

A conventional blender includes a lid, a bottom seat including a motor, a container mounted on the bottom seat for receiving food materials, and a blade extending into a bottom portion of the container and driven rotatably by the motor. The blade cuts and mixes the food materials when being rotated by the motor. The container includes a surrounding wall having an inner surface that has spaced-apart bottom and top edges, and a plurality of turbulence ridges protruding from the inner surface of the surrounding wall. Each of the turbulence ridges is an upright ridge extending from the bottom edge toward the top edge of the inner surface in an up-down direction.

The presence of the turbulence ridges leads to a vortex of liquid in the container during rotation of the blade, thereby facilitating mix of the food materials. However, during operation of the conventional blender, the food materials will be moved upwardly and outwardly from a bottom portion of the container by a centrifugal force and fall back to the bottom portion of the container after hitting the lid, so that a part of the foodmaterials may stick on a top portion of the inner surface of the container and remain uncut and unmixed, thereby affecting a working effectiveness of the conventional blender.

Therefore, an object of the disclosure is to provide a container that can alleviate at least one of the drawbacks of the prior art.

According to the disclosure, the container is adapted for use in a blender and includes a surrounding wall surrounding an axis, defining a receiving space, and having an inner surface that faces the receiving space and that has spaced-apart bottom and top edges. The container further includes a plurality of turbulence ridges protruding from the inner surface of the surrounding wall into the receiving space. Each of the turbulence ridges extends from the bottom edge toward the top edge of the inner surface and extends spirally about the axis.

Another object of the disclosure is to provide a blender that can alleviate at least one of the drawbacks of the prior art.

According to the disclosure, the blender includes a power mechanism, a blade rotatably driven by the power mechanism, and the above-mentioned container. The blade extends into the receiving space of the container.

Other features and advantages of the disclosure will become apparent in the following detailed description of the embodiments with reference to the accompanying drawings, of which:
Figure 1 is an exploded perspective view illustrating a first embodiment of a blender according to the disclosure;
Figure 2 is a front view of the first embodiment;
Figure 3 is a sectional front view of a container of the first embodiment;
Figure 4 is a sectional top view of the container and a blade of the first embodiment; and
Figure 5 is a sectional side view of a container and a blade of a second embodiment of the blender according to the disclosure;
Figure 6 is a schematic partly sectional view of a container of a third embodiment of the blender according to the disclosure;
Figure 7 is a sectional view of the container taken along line 7-7 in Figure 6;
Figure 8 is a sectional view of the container taken along line 8-8 in Figure 6;
Figure 9 is a sectional view of the container taken along line 9-9 in Figure 6; and
Figure 10 is a fragmentary enlarged view of Figure 9.

Before the disclosure is described in greater detail, it should be noted that where considered appropriate, reference numerals or terminal portions of reference numerals have been repeated among the figures to indicate corresponding or analogous elements, which may optionally have similar characteristics.

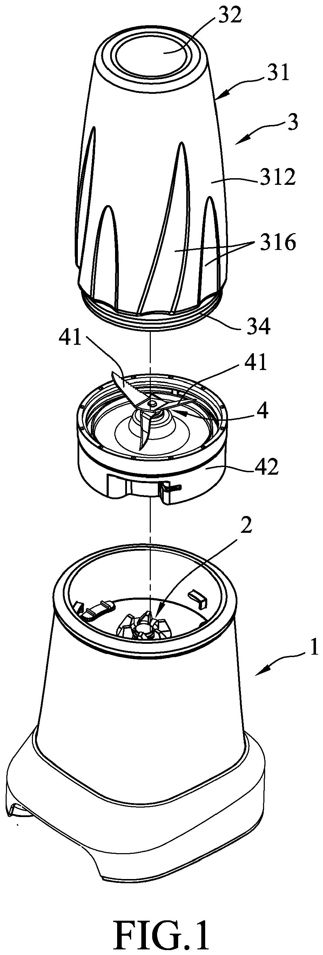

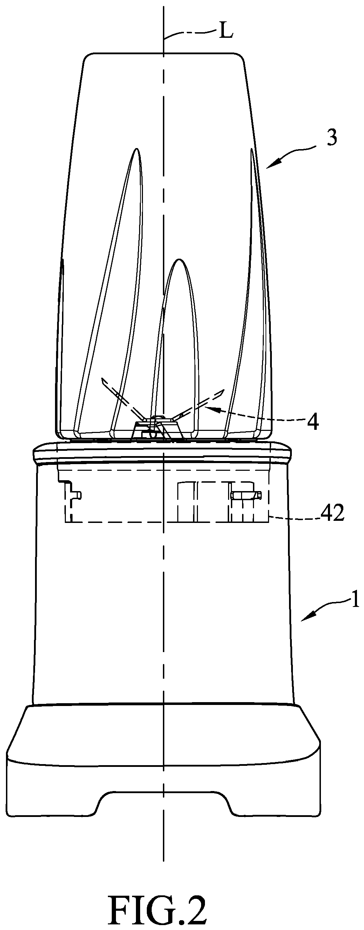

Referring to Figures 1 to 4, the first embodiment of a blender includes a seat base 1, a power mechanism 2, a container 3 and a blade 4.

A plurality of switches and buttons (not shown) are disposed on the seat base 1, and can be used by a user to turn on or turn off the blender and to control a rotational speed and a rotational time of the blade 4.

The power mechanism 2 is mounted on the seat base 1, is connected to the blade 4, and includes a motor (not shown) and a transmission member connected to the motor, so that the power mechanism 2 is operable to drive a rotation of the blade 4.

The container 3 includes a surrounding wall 31 surrounding an axis (L) and defining a receiving space 30, a top wall 32 connected to an upper end of the surrounding wall 31, a plurality of turbulence ridges 33, and a connecting wall 34 connected to a lower end of the surrounding wall 31 and formed with an external thread. In this embodiment, the surrounding wall 31, the top wall 32 and the connecting wall 34 are formed as one piece. The surrounding wall 31 has an inner surface 311 facing the receiving space 30 and having spaced-apart bottom and top edges 314, 315 that are disposed respectively at the lower and upper ends of the surrounding wall 31, and an outer surface 312 opposite to the inner surface 311.

The turbulence ridges 33 protrude from the inner surface 311 of the surrounding wall 31 into the receiving space 30. Each of the turbulence ridges 33 extends from the bottom edge 314 toward the top edge 315 of the inner surface 311, extends spirally about the axis (L), and has a bottom end 331 connected to the bottom edge 314 of the inner surface 311 and a top end 332 opposite to the bottom end 331. The bottom end 331 and the top end 332 are respectively distal from and proximate to the top edge 315 of the inner surface 311. At least one of the turbulence ridges 33 has a width gradually increasing from the top end 332 to the bottom end 331, so that the at least one of the turbulence ridges 33 is in a shape that is thin at the top end 332 and that is wide at the bottom end 331. Such design facilitates creation of a vortex of liquid in the container 3. In addition, with such design, food materials borne by the vortex will be easily struck back to a center of the receiving space 30, where is also a working area of the blade 4, to be cut and well-mixed.

In this embodiment, the turbulence ridges 33 include a plurality of first turbulence ridges 330 and a plurality of second turbulence ridges 330'. The first turbulence ridges 330 are alternately arranged with the second turbulence ridges 330'. A distance (d1) between projections of circumferentially-opposite endmost ends of each of the first turbulence ridges 330 on the bottom edge 314 of the inner surface 311 of the surrounding wall 31 is longer than a distance (d2) between projections of circumferentially-opposite endmost ends of each of the second turbulence ridges 330' on the bottom edge 314 of the inner surface 311 of the surrounding wall 31. A ratio of a height (H1) of each of the first turbulence ridges 330 from the bottom edge 314 of the inner surface 311 to the top end 332 in a direction of the axis (L) to a height (H) of the surrounding wall 31 along the axis (L) ranges from 0.5 to 0.75, and a ratio of a height (H2) of each of the second turbulence ridges 330' from the bottom edge 314 of the inner surface 311 to the top end 332 in the direction of the axis (L) to the height (H) of the surrounding wall 31 along the axis (L) ranges from 0.2 to 0.5.

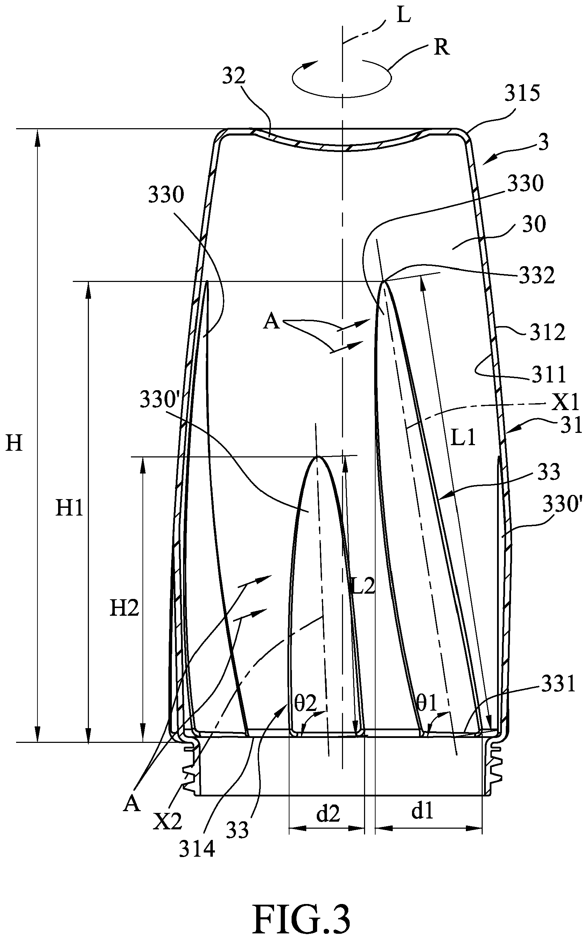

In this embodiment, an angle (θ1) defined between the bottom edge 314 of the inner surface 311 and an imaginary line (X1), which is not parallel to the axis (L), between the top end 332 of each of the first turbulence ridges 330 and a center of the bottom end 331 of a corresponding one of the first turbulence ridges 330 is smaller than an angle (θ2) defined between the bottom edge 314 of the inner surface 311 and an imaginary line (X2), which is not parallel to the axis (L), between the top end 332 of each of the second turbulence ridges 330' and a center of the bottom end 331 of a corresponding one of the second turbulence ridges 330'. The angles (θ1, θ2) are not less than 80 degrees and are smaller than 90 degrees. Each of the first turbulence ridges 330 has a length (L1) which is equal to a length of the imaginary line (X1), and each of the second turbulence ridges 330' has a length (L2) which is equal to a length of the imaginary line (X2). The length (L1) of each of the first turbulence ridges 330 is greater than the length (L2) of each of the second turbulence ridges 330'. With such design, the food materials that are moved upwardly and outwardly by a centrifugal force along a moving direction (A) (see Figure 3) would be stopped by the turbulence ridges 33 and fall down back to the working area of the blade 4.

In this embodiment, the outer surface 312 of the surrounding wall 31 of the container 3 has a plurality of recessed portions 316 extending inwardly and respectively corresponding in position to the turbulence ridges 33. It should be noted that, in other embodiments, the outer surface 312 may be a smooth surface (i.e., the recessed portions 316 may be omitted).

The blender further includes a blade seat 42 provided with an internal thread and threadedly connected to the connecting wall 34 of the container 3. The blade 4 has a plurality of blade bodies 41 mounted on the blade seat 42, and extending into a bottom portion of the receiving space 30 of the container 3.

Before use, the container 3 is firstly flipped over so that the receiving space 30 opens upwardly, the food materials are then placed into the receiving space 30 together with water, milk, or any other liquid for adding specific flavor, and the blade seat 42 is threadedly locked to the connecting wall 34 of the surrounding wall 31 with the blade 4 disposed thereon. Finally, the combination of the container 3 and the blade 4 is flipped over and mounted on the seat base 1 so that the blade 4 is connected to the power mechanism 2.

After the blade 4 is rotated by the power mechanism 2, the food materials are moved upwardly from the bottom portion of the receiving space 30 along a turbulence flow generated due to the presence of the turbulence ridges 33 and struck back by the turbulence ridges 33 to fall down back to the working area of the blade 4. In addition, since the turbulence ridges 330 extend spirally, the food materials can fall quickly back to the working area of the blade 4 along the spiral spaces between each adjacent pair of the turbulence ridges 330. As a result, the food materials can be effectively and efficiently cut and mixed instead of accumulating somewhere in the receiving space 30 of the container 3.

It should be noted that, in this embodiment, since the first turbulence ridges 330 and the second turbulence ridges 330' have different lengths, they can bring about different effects to the turbulent flow both in magnitude and direction, thereby producing a strong turbulent flow of the food materials. In addition, any food material that passes through the second turbulence ridges 330' can be stopped by the first turbulence ridges 330, so that a part of the food materials can be prevented from sticking on a top portion of the inner surface 311 of the container 3.

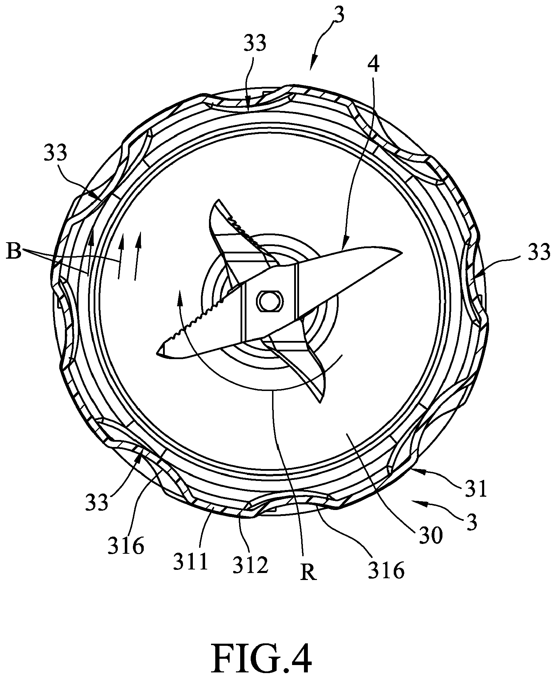

Moreover, the blade 4 is rotatable in a rotational direction (R) (see Figure 3), and the turbulence ridges 33 extend spirally in a direction opposite to the rotational direction (R). Therefore, during operation, the food materials rotate in a turbulent direction (B) (see Figure 4) and hits the turbulence ridges 33 so that the turbulence ridges 33 can enhance the turbulence flow of the food materials to improve the working effectiveness of the blender. It should be noted that, the power mechanism 2 may be configured to rotate the blade 4 in the rotational direction (R) or the direction opposite to the rotational direction (R). If the blade 4 is rotated in the direction opposite to the rotational direction (R), the working effectiveness of the blender can be further improved.

In conclusion, with the design of the turbulence ridges 33, the working efficiency and effectiveness of the blender can be raised.

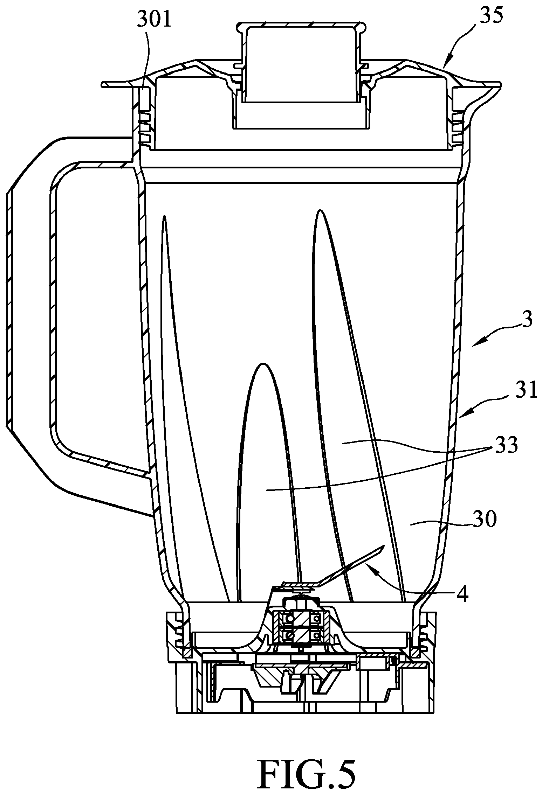

As shown in Figure 5, the second embodiment has a structure similar to that of the first embodiment. The main difference between this embodiment and the previous embodiment resides in the configuration and the operation of the container 3. In this embodiment, the blade 4 is connected to a bottom portion of the container 3, and the container 3 has an opening 301 opening upwardly. The container 3 further includes a lid 35 removably disposed on the container 3 and covering the opening 301. During operation, the lid 35 is firstly removed to allow placement of the food materials into the receiving space 30 through the opening 301, and then placed back on the container 3 to cover the opening 301. The second embodiment has the same advantages as those of the first embodiment.

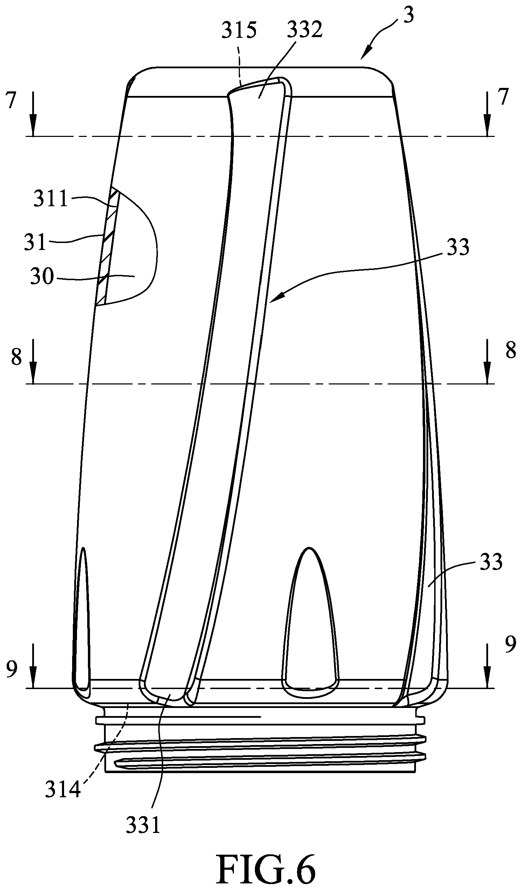

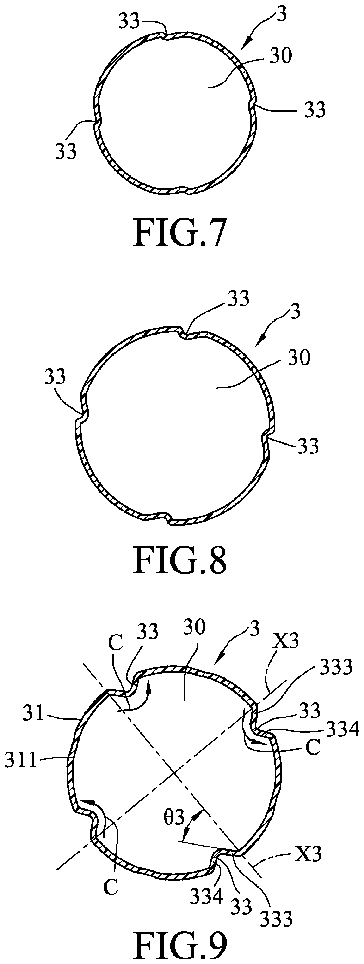

Referring to Figures 6 to 9, the third embodiment has a structure similar to that of the first embodiment. The main difference between this embodiment and the first embodiment resides in the configuration of the container 3. In this embodiment, each of the turbulence ridges 33 of the container 3 extends spirally from the bottom edge 314 to the top edge 315 of the inner surface 311, and has an aerofoil-shaped contour. With each of the turbulence ridges 33 having a smooth and curved surface, the turbulence ridges 33 may facilitate flow of the food materials in a flowing direction (C) as indicated in Figure 9. With the configuration of the turbulence ridges 33, the food materials within the entire receiving space 30 can be struck back by the turbulence ridges 33 toward the working area of the blade 4 instead of being accumulated on the top portion of the inner surface 311 of the container 3. In such manner, the turbulence flow of the food materials can be more even and the vibration of the blender can be prevented.

In addition, in this embodiment, each of the turbulence ridges 33 has a thickness which is measured from the inner surface 311 into the receiving space 30, and which gradually increases from the top end 332 to the bottom end 331 (as shown in Figures 7 to 9). Such configuration is designed on the basis that, since a flowing speed of the food materials increases from the top end 332 to the bottom end 331, a stronger turbulence flow is required for cutting and mixing the food materials flowing in the bottom portion of the container 3.

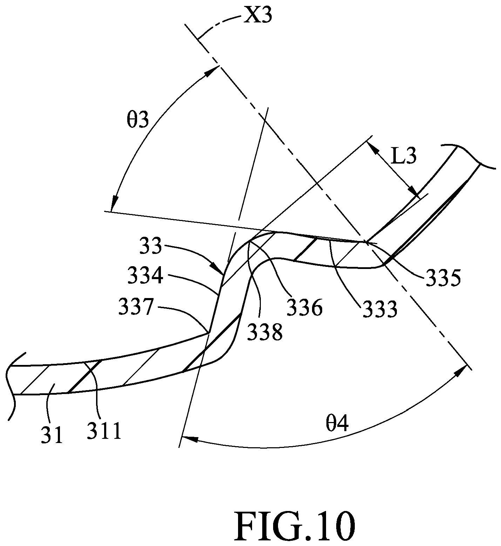

Referring to Figures 9 and 10, in this embodiment, each of the turbulence ridges 33 has a first protruding section 333 and a second protruding section 334 protruding from the inner surface 311 into the receiving space 30. The first protruding section 333 has a first end 335 connected to the inner surface 311, and a second end 336 connected to the second protruding section 334. The second protruding section 334 has a third end 337 connected to the inner surface 311, and a fourth end 338 connected to the second end 336 of the first protruding section 333. An imaginary plane (X3) is defined to extend through the first end 335 of the first protruding section 333 and the axis (L). An acute angle (θ3) defined between the first protruding section 333 and the imaginary plane (X3) ranges from 0 to 30 degrees. An acute angle (θ4) defined between an imaginary extension of the second protruding section 334 and the imaginary plane (X3) ranges from 60 to 90 degrees. A length (L3) of a projection of the first protruding section 333 on the imaginary plane (X3) measured in a direction from the first end 335 of the first protruding section 333 toward the axis (L) ranges from 5 millimeters to 20 millimeters. With the design of the acute angles (θ3, θ4), the strongest turbulence flow can be obtained.

The third embodiment has the same advantages as those of the first embodiment, and is suitable for cutting and mixing both dry and wet food materials that have a larger size without requiring that the food materials be cut in advance.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A container (3) adapted for use in a blender, and including a surrounding wall (31) that surrounds an axis (L), that defines a receiving space (30), and that has an inner surface (311) facing said receiving space (30) and having spaced-apart bottom and top edges (314, 315),
**characterized in that** said container (3) further includes a plurality of turbulence ridges (33) protruding from said inner surface (311) of said surrounding wall (31) into said receiving space (30), each of said turbulence ridges (33) extending from said bottom edge (314) toward said top edge (315) of said inner surface (311) and extending spirally about the axis (L).

2. The container (3) as claimed in Claim 1, further **characterized in that**:
said turbulence ridges (33) include a plurality of first turbulence ridges (330) and a plurality of second turbulence ridges (330');
each of said first turbulence ridges (330) has a length (L1) greater than a length (L2) of each of said second turbulence ridges (330'); and
said first turbulence ridges (330) are alternately arranged with said second turbulence ridges (330').

3. The container (3) as claimed in Claim 2, further **characterized in that**:
each of said first and second turbulence ridges (330, 330') has a bottom end (331) connected to said bottom edge (314) of said inner surface (311) and a top end (332) opposite to said bottom end (331);
a ratio of a height (H1) of each of said first turbulence ridges (330) from said bottom edge (314) of said inner surface (311) in a direction of the axis (L) to said top end (332) to a height (H) of said surrounding wall (31) along the axis (L) ranges from 0.5 to 0.75; and
a ratio of a height (H2) of each of said second turbulence ridges (330') from said bottom edge (314) of said inner surface (311) in the direction of the axis (L) to said top end (332) to the height (H) of said surrounding wall (31) along the axis (L) ranges from 0.2 to 0.5.

4. The container (3) as claimed in any one of Claims 2 to 3, further **characterized in that** an angle (θ1) defined between said bottom edge (314) of said inner surface (311) and an imaginary line (X1) between said top end (332) of each of said first turbulence ridges (330) and a center of said bottom end (331) of a corresponding one of said first turbulence ridges (330) is smaller than an angle (θ2) defined between saidbottom edge (314) of said inner surface (311) and an imaginary line (X2) between said top end (332) of each of said second turbulence ridges (330') and a center of said bottom end (331) of a corresponding one of said second turbulence ridges (330').

5. The container (3) as claimed in any one of Claims 2 to 4, further **characterized in that** a distance (d1) between projections of circumferentially-opposite endmost ends of each of said first turbulence ridges (330) on said bottom edge (314) of said inner surface (311) of said surrounding wall (31) is longer than a distance (d2) between projections of circumferentially-opposite endmost ends of each of said second turbulence ridges (330') on said bottom edge (314) of said inner surface (311) of said surrounding wall (31).

6. The container (3) as claimed in Claim 1, further **characterized in that**:
each of said turbulence ridges (33) has a bottom end (331) connected to said bottom edge (314) of said inner surface (311) and a top end (332), said bottom end (331) and said top end (332) being respectively distal from and proximate to said top edge (315) of said inner surface (311); and
at least one of said turbulence ridges (33) has a width gradually increasing from said top end (332) to said bottom end (331).

7. The container (3) as claimed in Claim 1, further **characterized in that**:
each of said turbulence ridges (33) has a bottom end (331) connected to said bottom edge (314) of said inner surface (311) and a top end (332) opposite to said bottom end (331); and
an angle (θ1, θ2) defined between said bottom edge (314) of said inner surface (311) and an imaginary line (X1, X2) between said top end (332) of each of said turbulence ridges (33) and a center of said bottom end (331) of a corresponding one of said turbulence ridges (33) is not less than 80 degrees and is smaller than 90 degrees.

8. The container (3) as claimed in any one of Claims 1 to 7, further **characterized in that** said surrounding wall (31) further has an outer surface (312) opposite to said inner surface (311) and having a plurality of recessed portions (316) that extend inwardly and that respectively correspond in position to said turbulence ridges (33).

9. The container (3) as claimed in Claim 1, further **characterized in that** at least one of said turbulence ridges (33) extends from said bottom edge (314) to said top edge (315) of said inner surface (311).

10. The container (3) as claimed in any one of Claims 1 and 9, further **characterized in that** at least one of said turbulence ridges (33) has a thickness which is measured from said inner surface (311) into said receiving space (30) and which gradually increases from said top end (332) to said bottom end (331).

11. The container (3) as claimed in any one of Claims 1, 9 and 10, further **characterized in that**:
at least one of said turbulence ridges (33) has a first protruding section (333) and a second protruding section (334) protruding from said inner surface (311) into said receiving space (30);
said first protruding section (333) has a first end (335) connected to said inner surface (311), and a second end (336) connected to said second protruding section (334);
said second protruding section (334) has a third end (337) connected to said inner surf ace (311), and a fourth end (338) connected to said second end (336) of said first protruding section (333);
an imaginary plane (X3) is defined to extend through said first end (335) of said first protruding section (333) and the axis (L);
an acute angle (θ3) defined between said first protruding section (333) and the imaginary plane (X3) ranges from 0 to 30 degrees; and
an acute angle (θ4) defined between an imaginary extension of said second protruding section (334) and the imaginary plane (X3) ranges from 60 to 90 degrees.

12. The container (3) as claimed in Claim 11, further **characterized in that** a length (L3) of a projection of said first protruding section (333) on the imaginary plane (X3) measured in a direction from said first end (335) of said first protruding section (333) toward the axis (L) ranges from 5 millimeters to 20 millimeters.

13. A blender including:
a power mechanism (2); and
a blade (4) rotatably driven by said power mechanism (2) ;
**characterized in that** said blender further includes a container (3) as claimed in any one of claims 1 to 12, said blade (4) extending into said receiving space (30) of said container (3).

14. The blender as claimed in Claim 13, further **characterized in that** said blade (4) is rotatable in a rotational direction (R), and said turbulence ridges (33) extend spirally from said bottom edge (314) of said inner surface (311) of said surrounding wall (31) in a direction opposite to the rotational direction (R).
